(19) Europäisches Patentamt
European Patent Office
Office européen des brevets

(11) EP 3 884 778 A1

(12) EUROPEAN PATENT APPLICATION

(43) Date of publication:
29.09.2021 Bulletin 2021/39

(51) Int Cl.:
A01N 43/707 (2006.01)        A01N 43/82 (2006.01)
A01N 43/40 (2006.01)         A01P 13/00 (2006.01)

(21) Application number: 21164946.2

(22) Date of filing: 25.03.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2020 GB 202004460

(71) Applicants:
• UPL Corporation Limited
Port Louis (MU)

• UPL Europe Ltd
Warrington, Cheshire WA3 6YN (GB)

(72) Inventors:
• POLLET, Jean-Philippe
Port Louis (MU)
• HELLER, Jean-Jaques
Port Louis (MU)
• KIEVIT, Tony
Port Louis (MU)

(74) Representative: J A Kemp LLP
14 South Square
Gray's Inn
London WC1R 5JJ (GB)

(54) **HERBICIDAL COMBINATION**

(57) A herbicidal combination comprising metamitron, a second herbicide, optionally a third herbicide and methods of use thereof.

EP 3 884 778 A1

**Description**

**Technical Field:**

The present invention relates to combinations of herbicides for controlling harmful undesirable plants. The present invention more specifically relates to a synergistic combination of herbicides.

**Background and prior art:**

Weeds are undesirable plants that can severely damage yield in crops. Farmers usually control these plants at the pre-plant stage as well as after sowing. Modern herbicides are used to either control or suppress these undesirable plants so as to allow sown crops a greater share of nutrient.

Current practices include combining herbicides with varied modes of action, which allows for broader spectrum of control and resistance management. However, the combinations currently known are not sufficient to control the resistant and persistent weeds. Growers increasingly face complex weed situations that may not be controlled with just one herbicide.

Combinations of herbicides are used to control a broader range of weeds. However, the combination of herbicides may not always result in the desired effect. Combination of herbicides may lead to an additive effect or an antagonistic effect. It may also result in phytotoxicity to the crops making it an undesirable combination. Agronomists must therefore carefully select the herbicides that can be combined to offer a synergistic effect that would control weeds while having no phytotoxic effect on the crop, and reduce the chances of development of herbicide resistant weeds.

There is therefore a need in the art for combinations that have advantageous properties such as a herbicidal combination that is synergistic, helps in resistance management, reduces dosage of herbicides used thus causing minimal damage to the environment, and a herbicidal combination that has excellent residual effects.

Embodiments of the present invention, as described further below, may therefore ameliorate one or more of the above-mentioned problems.:

**Summary of the invention:**

Therefore, in one aspect, the present invention may provide a herbicidal combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a herbicidal combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a method of controlling weeds at a locus, said method comprising applying to the locus a herbicidal combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a method of controlling weeds at a locus, said method comprising applying to the locus a herbicidal combination comprising:

(a) metamitron;

(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and

(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In an aspect, the present invention may provide a herbicidal composition comprising:

(a) metamitron;

(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet; and

(c) at least one agrochemically acceptable excipient.

In an aspect, the present invention may provide a herbicidal composition comprising:

(a) metamitron;

(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet;

(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr; and

(d) at least one agrochemically acceptable excipient.

In another aspect, the present invention may provide a method of controlling weeds in a cereal crop, said method comprising applying, to the crop or to a locus at which the crop is growing or intended to be grown, a herbicidal combination comprising:

(a) metamitron; and

(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a method of controlling weeds in a cereal crop, said method comprising applying, to a locus at which the crop is growing or is intended to be grown, a herbicidal combination comprising:

(a) metamitron;

(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and

(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Yet another aspect of the present invention may provide a method of increasing yield in a crop by application of a combination comprising:

(a) metamitron; and

(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

Yet another aspect of the present invention may provide a method of increasing yield in a crop by application of a combination comprising:

(a) metamitron;
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Another aspect of the present invention may provide a method of improving the plant health of a crop, said method comprising application at the locus of the crop a combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet.

Another aspect of the present invention may provide a method of improving the plant health of a crop, said method comprising application at the locus of the crop a combination comprising:

(a) metamitron;
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention provides a kit-of-parts comprising a plurality of components, wherein said plurality of components comprises:

(a) at least a first component comprising metamitron; and
(b) at least a second component comprising at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In a further aspect, the pesent invention provides a kit-of-parts comprising a plurality of components, wherein said plurality of components comprises:

(a) at least a first component comprising metamitron; and
(b) at least a second component comprising at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.
(c) additionally a third component comprising at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

## Detailed Description of the invention:

The term herbicide, as used herein, shall mean an active ingredient that kills, controls or otherwise adversely modifies the growth of weeds. As used herein, a herbicidally effective or vegetation controlling amount is an amount of active ingredient that causes a "herbicidal effect," i.e., an adversely modifying effect and includes deviations from natural development, killing, regulation, desiccation, retardation. The terms "plants" and "vegetation" include, but are not limited to, germinant seeds, emerging seedlings, plants emerging from vegetative propagules, and established vegetation. The term "locus" as used herein shall denote the vicinity of a desired crop in which weed control, typically selective weed control, of weeds is desired. The locus includes the vicinity of desired crop plants wherein the weed infestation has either emerged or is yet to emerge. The term crop shall include a multitude of desired crop plants or an individual crop plant growing at a locus.

The present inventors do not wish to be bound by a theory. Metamitron is a photosystem II inhibitor that inhibits photosynthesis by binding to the QB-binding niche on the D1 protein of the photosystem II complex in chloroplast thylakoid membranes. Inability to reoxidize QA promotes the formation of triplet state chlorophyll which interacts with ground state oxygen to form singlet oxygen. Both triplet chlorophyll and singlet oxygen can abstract hydrogen from unsaturated lipids, producing a lipid radical and initiating a chain reaction of lipid peroxidation. Lipids and proteins are attacked and oxidized, resulting in loss of chlorophyll and carotenoids and in leaky membranes which allow cells and cell organelles to dry and disintegrate rapidly.

It has been surprisingly found that the activity of metamitron was synergistically enhanced in the presence of anilide cell division inhibitors.

In another embodiment, it was further found that the activity of this combination could be further enhanced by the inclusion of carotenoid biosynthesis inhibitors such as pyridine herbicides that block carotenoid biosynthesis by inhibition of phytoene desaturase. Carotenoids dissipate the oxidative energy of singlet $O_2$ ($^1O_2$). Therefore, it was surprisingly found that inhibition of carotenoid biosynthesis further synergized the activity of a combination of metamitron with anilide cell division inhibitors by synergizing the generation of singlet oxygen. It has been observed that the triple combination of the present embodiment may trigger a self-sustaining chain reaction of lipid peroxidation which functionally destroys chlorophyll and membrane lipids, and destruction of proteins by singlet oxygen.

Therefore, in one aspect, the present invention may provide a herbicidal combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a herbicidal combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) diflufenican; and
(c) at least one pyridine herbicide selected from the group consisting of aminopyralid, cliodinate, clopyralid, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) flufenacet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) ipfencarbazone; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) mefenacet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) propanil; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a herbicidal combination comprising:

(a) metamitron;
(b) sulfentrazone; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention provides a method of controlling weeds at a locus by applying the combinations of the present invention to the locus.
In another aspect, the present invention may provide a method of controlling weeds at a locus, said method comprising applying to the locus a herbicidal combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a method of controlling weeds at a locus, said method comprising applying to the locus a herbicidal combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention provides a composition comprising the combinations of the present invention. Thus, the present invention provides a herbical composition comprising the combinations of the present invention and at least one agrochemically acceptable excipient.
In an aspect, the present invention may provide a herbicidal composition comprising:

(a) metamitron;
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet; and
(c) at least one agrochemically acceptable excipient.

In an aspect, the present invention may provide a herbicidal composition comprising:

(a) metamitron;
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet;
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr; and
(d) at least one agrochemically acceptable excipient.

In another aspect, the present invention provides a method for increasing yield in a crop by using the combinations and compositions of the present invention.

Yet another aspect of the present invention may provide a method of increasing yield in a crop by application of a combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

Yet another aspect of the present invention may provide a method of increasing yield in a crop by application of a combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

In another aspect, the present invention may provide a method of improving the plant health of a crop using the combinations and compositions of the present invention.

Another aspect of the present invention may provide a method of improving the plant health of a crop, said method comprising application at the locus of the crop a combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet.

Another aspect of the present invention may provide a method of improving the plant health of a crop, said method comprising application at the locus of the crop a combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Preferably the crop is a cereal crop. More preferably the crop is wheat.

In another aspect, the present invention may provide a method of controlling weeds in a cereal crop, said method comprising applying, to the crop or to a locus at which the crop is growing or intended to be grown, the combinations and compositions of the present invention.

Thus, in another aspect, the present invention may provide a method of controlling weeds in a cereal crop, said method comprising applying, to the crop or to a locus at which the crop is growing or intended to be grown, a herbicidal combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a method of controlling weeds in a cereal crop, said method comprising applying, to a locus at which the crop is growing or is intended to be grown, a herbicidal combination comprising:

(a) metamitron;
(b) at least one anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Each of the aspect described above may have one or more embodiments.
Each of the embodiments described hereinafter may apply to one or all of the aspects described hereinabove. These embodiments are intended to be read as being preferred features of one or all of the aspects described hereinabove. Each of the embodiments described hereinafter applies to each of the aspects described hereinabove individually.
Typically, metamitron may be combined with another anilide herbicide selected from the group consisting of chloranocryl, cisanilide, clomeprop, cypromid, diflufenican, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet. Preferably metamitron is combined with another anilide herbicide selected from the group consisting of fenasulam, diflufenican, flufenacet, ipfencarbazone, mefenacet, propanil and sulfentrazone. Most preferably the anilide herbicide is flufenacet or diflufenican, more preferably flufenacet. Typically, (a) metamitron is combined with (b) one anilide herbicide, rather than more than one anilide herbicide.
In an embodiment, the combination comprises metamitron and fenasulam.
In an embodiment, the combination comprises metamitron and flufenacet.
In an embodiment, the combination comprises metamitron and diflufenican.
In an embodiment, the combination comprises metamitron and ipfencarbazone.
In an embodiment, the combination comprises metamitron and mefenacet.
In an embodiment, the combination comprises metamitron and propanil.
In an embodiment, the combination comprises metamitron and sulfentrazone.
In an embodiment, the combinations of the present invention comprise at least three different herbicides.
Typically, the pyridine herbicide may be selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr. Preferably, the pyridine herbicide may be selected from the group consisting of diflufenican, flufenican, fluroxypyr, halauxifen, picloram, pyroxsulam, and triclopyr. Most, preferably the pyridine herbicide is diflufenican. Typically, (a) metamitron is combined with (b) one anilide herbicide, (i.e. rather than more than one anilide herbicide), and (c) one pyridine herbicide (i.e. rather than more than one pyridine herbicide).
For the avoidance of doubt, it is noted that diflufenican, flufenican and picolinafen are classified as both anilide and pyridine herbicides. Thus, these compounds appear in the lists of both anilide herbicides and pyridine herbicides provided herein. Accordingly, if diflufenican, flufenican or picolinafen are present as the anilide herbicide component, then (if present) the pyridine herbicide compment will not be diflufenican, flufenican or picolinafen.
In an embodiment, the combination comprises metamitron, fenasulam, and diflufenican.
In an embodiment, the combination comprises metamitron, fenasulam, and flufenican.
In an embodiment, the combination comprises metamitron, fenasulam, and fluroxypyr.
In an embodiment, the combination comprises metamitron, fenasulam, and halauxifen.
In an embodiment, the combination comprises metamitron, fenasulam, and picloram.
In an embodiment, the combination comprises metamitron, fenasulam, and pyroxsulam.
In an embodiment, the combination comprises metamitron, fenasulam, and triclopyr.
In an embodiment, the combination comprises metamitron, flufenacet, and diflufenican.
In an embodiment, the combination comprises metamitron, flufenacet, and flufenican.
In an embodiment, the combination comprises metamitron, flufenacet, and fluroxypyr.
In an embodiment, the combination comprises metamitron, flufenacet, and halauxifen.
In an embodiment, the combination comprises metamitron, flufenacet, and picloram.

In an embodiment, the combination comprises metamitron, flufenacet, and pyroxsulam.

In an embodiment, the combination comprises metamitron, flufenacet, and triclopyr.

In an embodiment, the combination comprises metamitron and diflufenican.

In an embodiment, the combination comprises metamitron, diflufenican, and flufenican.

In an embodiment, the combination comprises metamitron, diflufenican, and fluroxypyr.

In an embodiment, the combination comprises metamitron, diflufenican, and halauxifen.

In an embodiment, the combination comprises metamitron, diflufenican, and picloram.

In an embodiment, the combination comprises metamitron, diflufenican, and pyroxsulam.

In an embodiment, the combination comprises metamitron, diflufenican, and triclopyr.

In an embodiment, the combination comprises metamitron, ipfencarbazone, and dilfufenican.

In an embodiment, the combination comprises metamitron, ipfencarbazone, and flufenican.

In an embodiment, the combination comprises metamitron, ipfencarbazone, and fluroxypyr.

In an embodiment, the combination comprises metamitron, ipfencarbazone, and halauxifen.

In an embodiment, the combination comprises metamitron, ipfencarbazone, and picloram.

In an embodiment, the combination comprises metamitron, ipfencarbazone, and pyroxsulam.

In an embodiment, the combination comprises metamitron, ipfencarbazone, and triclopyr.

In an embodiment, the combination comprises metamitron, mefenacet and diflufenican.

In an embodiment, the combination comprises metamitron, mefenacet and flufenican.

In an embodiment, the combination comprises metamitron, mefenacet and fluroxypyr.

In an embodiment, the combination comprises metamitron, mefenacet and halauxifen.

In an embodiment, the combination comprises metamitron, mefenacet and picloram.

In an embodiment, the combination comprises metamitron, mefenacet and pyroxsulam.

In an embodiment, the combination comprises metamitron, mefenacet and triclopyr.

In an embodiment, the combination comprises metamitron, propanil and diflufenican.

In an embodiment, the combination comprises metamitron, propanil and flufenican.

In an embodiment, the combination comprises metamitron, propanil and fluroxypyr.

In an embodiment, the combination comprises metamitron, propanil and halauxifen.

In an embodiment, the combination comprises metamitron, propanil and picloram.

In an embodiment, the combination comprises metamitron, propanil and pyroxsulam.

In an embodiment, the combination comprises metamitron, propanil and triclopyr.

In an embodiment, the combination comprises metamitron, sulfentrazone and dilfufenican.

In an embodiment, the combination comprises metamitron, sulfentrazone and flufenican.

In an embodiment, the combination comprises metamitron, sulfentrazone and fluroxypyr.

In an embodiment, the combination comprises metamitron, sulfentrazone and halauxifen.

In an embodiment, the combination comprises metamitron, sulfentrazone and picloram.

In an embodiment, the combination comprises metamitron, sulfentrazone and pyroxsulam.

In an embodiment, the combination comprises metamitron, sulfentrazone and triclopyr.

In an embodiment, the present invention provides preferred combinations, preferred compositions and methods for using those combinations and compositions.

The methods of the invention include a method of controlling weeds at a locus by applying to the locus the combination or the composition, a method of increasing yield in a crop by application of the combination or composition, or a method of improving the plant health of a crop by application at the locus of the crop the combination or the composition. The embodiments described herein describe the preferred embodiments of all these possible combinations, compositions and methods of the invention.

The combinations and compositions of the invention may be applied to the locus of the weeds, in herbicidally effective amounts.

The combinations and compositions of the present invention may be combined with at least another active ingredient such as those selected from but not limited to herbicide, insecticide, fungicide, biological agent, plant growth activator, fertilizers or combinations thereof.

Thus, the combinations and compositions of the present invention may be combined with another herbicide. Exemplary herbicides that may be combined with the combination of the present invention may be selected from but not limited to herbicides belonging to classes such as EPSP synthase inhibitors, synthetic auxins, auxin transport inhibitors, glutamate synthase inhibitors, HPPD inhibitors, lipid synthesis inhibitors, long chain fatty acid inhibitors, as well as herbicides with unknown modes of action.

Typically, the total amount of metamitron in the combination or composition may be such that it provides metamitron, to the applied field, in a dosage range of about 250 g/ha to about 3000 g/ha, preferably in a dosage range of about 500 g/ha to about 1700 g/ha, more preferably in a dosage range of about 700 g/ha to about 1400 g/ha.

Typically, the total amount of the anilide herbicide in the composition may be such that it provides the anilide herbicide, to the applied field, in a dosage range of about 20 g/ha to about 500 g/ha, preferably in a dosage range of about 40 g/ha to about 320 g/ha, more preferably in a dosage range of about 60 g/ha to about 240 g/ha.

Typically, the total amount of the pyridine herbicide in the composition may be such that it provides the pyridine herbicide, to the applied field, in a dosage range of about 20 g/ha to about 500 g/ha, preferably in a dosage range of about 40 g/ha to about 320 g/ha, more preferably in a dosage range of about 60 g/ha to about 240 g/ha.

Typically:

- the total amount of metamitron in the combination or composition may be such that it provides metamitron, to the applied field, in a dosage range of about 250 g/ha to about 3000 g/ha,
- the total amount of the anilide herbicide in the composition may be such that it provides the anilide herbicide, to the applied field, in a dosage range of about 20 g/ha to about 500 g/ha, and
- the total amount of the pyridine herbicide in the composition may be such that it provides the pyridine herbicide, to the applied field, in a dosage range of about 20 g/ha to about 500 g/ha

Preferably:

- the total amount of metamitron in the combination or composition may be such that it provides metamitron, to the applied field, in a dosage range of about 500 g/ha to about 1700 g/ha,
- the total amount of the anilide herbicide in the composition may be such that it provides the anilide herbicide, to the applied field, in a dosage range of about 40 g/ha to about 320 g/ha, and
- the total amount of the pyridine herbicide in the composition may be such that it provides the pyridine herbicide, to the applied field, in a dosage range of about 40 g/ha to about 320 g/ha.

More preferably:

- the total amount of metamitron in the combination or composition may be such that it provides metamitron, to the applied field, in a dosage range of about 700 g/ha to about 1400 g/ha,
- the total amount of the anilide herbicide in the composition may be such that it provides the anilide herbicide, to the applied field, in a dosage range of about 60 g/ha to about 240 g/ha, and
- the total amount of the pyridine herbicide in the composition may be such that it provides the pyridine herbicide, to the applied field, in a dosage range of about 60 g/ha to about 240 g/ha.

The herbicidal combinations and compositions of the present invention maybe used to target weeds among the crops such corn, rice, wheat, barley, rye, oat, sorghum, cotton, soybean, peanut, buckwheat, beet, rapeseed, sunflower, sugar cane, tobacco, etc.; vegetables: solanaceous vegetables such as eggplant, tomato, pimento, pepper, potato, etc., cucurbit vegetables such as cucumber, pumpkin, zucchini, water melon, melon, squash, etc., cruciferous vegetables such as radish, white turnip, horseradish, kohlrabi, Chinese cabbage, cabbage, leaf mustard, broccoli, cauliflower, etc., asteraceous vegetables such as burdock, crown daisy, artichoke, lettuce, etc, liliaceous vegetables such as green onion, onion, garlic, and asparagus, ammiaceous vegetables such as carrot, parsley, celery, parsnip, etc., chenopodiaceous vegetables such as spinach, Swiss chard, etc., lamiaceous vegetables such as Perilla frutescens, mint, basil, etc, strawberry, sweet potato, Dioscorea japonica, colocasia, etc., flowers, foliage plants, turf grasses, fruits: pome fruits such apple, pear, quince, etc, stone fleshy fruits such as peach, plum, nectarine, Prunus mume, cherry fruit, apricot, prune, etc., citrus fruits such as orange, lemon, rime, grapefruit, etc., nuts such as chestnuts, walnuts, hazelnuts, almond, pistachio, cashew nuts, macadamia nuts, etc. berries such as blueberry, cranberry, blackberry, raspberry, etc., grape, kaki fruit, olive, plum, banana, coffee, date palm, coconuts, etc. , trees other than fruit trees; tea, mulberry, flowering plant, trees such as ash, birch, dogwood, Eucalyptus, Ginkgo biloba, lilac, maple, Quercus, poplar, Judas tree, Liquidambar formosana, plane tree, zelkova, Japanese arborvitae, fir wood, hemlock, juniper, Pinus, Picea, and Taxus cuspidate, etc.

The preferred crop is a cereal crop, such as wheat.

The compositions of the present invention may contain agriculturally acceptable adjuvants, carriers, diluents, emulsifiers, fillers, anti-foaming agents, thickening agents, anti-freezing agents, freezing agents etc. The compositions may be either solid or liquids. They can be solids, such as, for example, dusts, granules, water-dispersible granules, microcapsules or wettable powders, or liquids, such as, for example, emulsifiable concentrates, solutions, emulsions or suspensions, ZC formulations. They can also be provided as a pre-mix or tank mixed.

Suitable agricultural adjuvants and carriers may include, but are not limited to, crop oil concentrates; methylated seed oils, emulsified methylated seed oil, nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-sec-butylphenol EO-PO block copolymer; polysiloxane-methyl cap; nonylphenol ethoxylate, urea ammonium nitrate; tridecyl alcohol (synthetic) ethoxylate (8EO); tallow amine ethoxylate ; PEG(400) dioleate-99, alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkyl-naphthalene-sulfonate salts, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

Suitable liquid carriers that may be employed in a composition of the present invention may include water or organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, N,N-dimethyl alkylamides, dimethyl sulfoxide.

Solid carriers that may be employed in the compositions of the present invention may include but are not limited to attapulgite, pyrophyllite clay, silica, kaolin clay, kieselguhr, chalk, diatomaceous earth, lime, calcium carbonate, bentonite clay, Fuller's earth, talc, cottonseed hulls, wheat flour, soybean flour, pumice, wood flour, walnut shell flour, lignin, cellulose etc.

The target weeds may be selected from Alopecurus myosuroides Huds. (blackgrass, ALOMY), Amaranthus palmeri (Palmer amaranth, AMAPA) Amaranthus viridis (slender amaranth, AMAVI), Avena fatua (wild oat, AVEFA), Brachiaria decumbens Stapf. or Urochloa decumbens (Stapf), Brachiaria brizantha or Urochloa brizantha, Brachiaria platyphylla (Groseb.) Nash or Urochloa platyphylla (broadleaf signalgrass, BRAPP), Brachiaria plantaginea. or Urochloa plantaginea (alexandergrass, BRAPL), Cenchrus echinatus (southern sandbur, CENEC), Digitaria horizontalis Willd. (Jamaican crabgrass, DIGHO), Digitaria insularis (sourgrass, TRCIN), Digitaria sanguinalis (large crabgrass, DIGSA), Echinochloa crus-galli (barnyardgrass, ECHCG), Echinochloa colonum (junglerice, ECHCO), Eleusine indica Gaertn. (goosegrass, ELEIN), Lolium multiflorum Lam. (Italian ryegrass, LOLMU), Panicum dichotomiflorum Michx. (fall panicum, PANDI), Panicum miliaceum L. (wildproso millet, PANMI), Sesbania exaltata (hemp sesbania, SEBEX), Setaria faberi Herrm. (giant foxtail, SETFA), Setaria viridis (green foxtail, SETVI), Sorghum halepense (Johnsongrass, SORHA), Sorghum bicolor, Moench ssp., Arundinaceum (shattercane, SORVU), Cyperus esculentus (yellow nutsedge, CYPES), Cyperus rotundus (purple nutsedge, CYPRO), Abutilon theophrasti (velvetleaf, ABUTH), Amaranthus species (pigweeds and amaranths, AMASS), Ambrosia artemisiifolia L. (common ragweed, AMBEL), Ambrosia psilostachya DC. (western ragweed, AMBPS), Ambrosia trifida (giant ragweed, AMBTR), Anoda cristata (spurred anoda, ANVCR), Asclepias syriaca (common milkweed, ASCSY), Bidens pilosa (hairy beggarticks, BIDPI), Borreria species (BOISS), Borreria alata or Spermacoce alata Aubl. or Spermacoce latifolia (broadleaf buttonweed, BOILF), Chenopodium album L. (common lambsquarters, CHEAL), Cirsium arvense (Canada thistle, CIRAR), Commelina benghalensis (tropical spiderwort, COMBE), Datura stramonium (jimsonweed, DATST), Daucus carota (wild carrot, DAUCA), Euphorbia heterophylla (wild poinsettia, EPHHL), Euphorbia hirta or Chamaesyce hirta (garden spurge, EPHHI), Euphorbia dentata Michx. (toothed spurge, EPHDE), Erigeron bonariensis or Conyza bonariensis (hairy fleabane, ERIBO), Erigeron canadensis or Conyza canadensis (horseweed, ERICA), Conyza sumatrensis (tall fleabane, ERIFL), Helianthus annuus (common sunflower, HELAN), Jacquemontia tamnifolia (smallflower morningglory, IAQTA), Ipomoea hederacea (ivyleaf morningglory, IPOHE), Ipomoea lacunosa (white morningglory, IPOLA), Lactuca serriola (prickly lettuce, LACSE), Portulaca oleracea (common purslane, POROL), Richardia species (pusley, RCHSS), Salsola tragus (Russian thistle, SASKR), Sida species (sida, SIDSS), Sida spinosa (prickly sida, SIDSP), Sinapis arvensis (wild mustard, SINAR), Solanum ptychanthum (eastern black nightshade, SOLPT), Tridax procumbens (coat buttons, TRQPR), Rumex dentatus (RUMDE), Xanthium strumarium (common cocklebur, XANST), Lamium purpureum (LAMPU), Stellaria media (STEME), Cyanus segetum (CENCY), or Galium aparine (GALAP).

Preferably the target weed is Alopecurus myosuroides Huds. (blackgrass, ALOMY); GERDI, *Geranium dissectum L;* Lolium multiflorum Lam. (Italian ryegrass, LOLMU); Portulaca oleracea (common purslane, POROL); Lamium purpureum (LAMPU); Stellaria media (STEME); Cyanus segetum (CENCY); or Galium aparine (GALAP).

A preferred target weed is Alopecurus myosuroides Huds. (blackgrass, ALOMY).

Another preferred target weed is GERDI, *Geranium dissectum L.*

The combinations of the present invention may be applied to the locus either simultaneously or sequentially, such that the two or three herbicides may be applied in a tank mix or as a pre-mixed composition. Accordingly, the present invention provides a tank-mix or pre-mixed composition comprising the combinations of the invention.

Thus, in this aspect, the present invention provides a tank-mix combination comprising:

(a) metamitron; and
(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In another aspect, the present invention may provide a tank-mix combination comprising:

(a) metamitron;
(b) at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

The combinations or compositions of the present invention may be applied either pre or post emergent. An advantage of the combination is surprisingly good residual effects, when applied in pre-emergent as well as quick knockdown when applied post emergent leading to quick control of weeds. The combinations and compositions of the present invention may be applied for quick burndown of weeds. Another advantage is quick knockdown in the case of burndown.

The method of control of the present invention may be carried out by spraying the suggested tank mixes, or the individual herbicides may be formulated as a kit-of-parts containing various components that may be mixed as instructed prior to spraying.

Thus, the present invention provides a kit-of-parts comprising the components of the combinations of the invention.

In an aspect, the present invention provides a kit-of-parts comprising a plurality of components, wherein said plurality of components comprises:

(b) at least a first component comprising metamitron; and
(c) at least a second component comprising at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

In an aspect, the present invention provides a kit-of-parts comprising a plurality of components, wherein said plurality of components comprises:

(a) at least a first component comprising metamitron;
(b) at least a second component comprising at least one anilide herbicide selected from the group consisting of chloranocryl, cisanilide, clomeprop, cypromid, erlujixiancaoan, etobenzamid, fenasulam, flufenacet, ipfencarbazone, mefenacet, mefluidide, metamifop, monalide, naproanilide, pentanochlor, picolinafen, propanil, sulfentrazone, and tetflupyrolimet; and
(c) at least a third component comprising at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Typically, the kit-of-parts comprises an instructions manual, said instructions manual comprising instructions directing a user to admix the components before being used.

The components of the present invention may be packaged such that the metamitron component, the anilide herbicide component and optionally the pyridine herbicide component are packaged separately and then tank mixed before the spraying.

The components of the present invention may be packaged such that the metamitron component, the anilide herbicide component and optionally the pyridine herbicide component may be packaged separately, and other additives are also packaged separately, such that the various components may be tank mixed at the time of spraying.

Alternatively, the components of the present invention may be packaged as composition such that the metamitron component, the anilide herbicide component and optionally the pyridine herbicide component are formulated into one composition and other additives are packaged separately, such that the two may be tank mixed at the time of spraying.

Surprisingly, it has been found by the present inventors, that metamitron, the anilide herbicides and optionally the pyridine herbicide of the present invention, when applied individually, were rather ineffective in the control of weeds, but demonstrated excellent synergistic control when applied together. The combination controlled the weed both pre and post emergently.

The synergistic correlation between these components of the combinations of the present invention was established by the application of the Colby's formula. In the Colby method, the expected (or predicted) response of a combination of herbicides is calculated by taking the product of the observed response for each individual component of the combination when applied alone divided by 100 and subtracting this value from the sum of the observed response for each component when applied alone. An unexpected enhancement in efficacy of the combination is then determined by comparing the observed response of the combination to the expected (or predicted) response as calculated from the observed response of each individual component alone. If the observed response of the combination is greater than the expected (or predicted) response, or stated conversely, if the difference between the observed and expected response is greater than zero, then the combination is said to be synergistic or unexpectedly effective.

Surprisingly and unexpectedly, when the combination of the present invention was analysed using this method, it demonstrated an observed - expected value of greater than zero which is indicative of an unexpected efficacy. The basis of demonstration of unexpected efficacy by comparison with the Colby formula is that herbicide (A) tested alone would kill a proportion of the target weeds and leave the remaining portion (a %) as survivors. Similarly, herbicide B tested alone will leave (b %) as survivors. When combined, A+B will, act independently on the target weeds (if unexpected activity is absent); component A leaving a% survivors, which survivors will be controlled by component B; which has an overall effect of a%*b%*100. Subsequently, if the percent control is greater than that predicted by the Colby formula or stated conversely, if the difference between the observed control and the expected control is greater than zero; then unexpected enhancement in activity is acknowledged. The degree to which the difference is greater than zero is not itself critical as long as it is greater than zero; however greater the difference, more significant is the enhancement or the unexpectedness in herbicidal control.

The following formula was used to calculate the expected activity of mixtures containing active ingredients, A and B:

$$\text{Expected (E)} = A + B - \frac{AB}{100}$$

Where

A = observed efficacy of active ingredient A at the same concentration as used in the mixture.

B = observed efficacy of active ingredient B at the same concentration as used in the mixture.

Examples:

Trials were conducted to evaluate the efficacy of the combinations of the present invention on a range of grass and broad leaf weeds and synergistic enhanecement due to the presence of metamitron was investigated. The combinations were applied pre-emergence in tank mix with the partner herbicides. Crop safety of winter wheat and barley was evaluated under the same conditions. The tested weeds were artificially sown at the test sites.

It was found that metamitron provided a synergistic boost of efficacy on various tested weeds with the other herbicides of the invention. All mixtures safe to winter wheat and winter barley even at high doses.

Treatments evaluated, application rate employed, weeds evaluated and resulting weed control are presented in the following tables.

**Table 1**

| Weed - ALOMY, Herbicides applied pre-emergence | | | | |
|---|---|---|---|---|
| Treatment | Formulation dose (Kg or L/ha) | Percentage Control (Observed) | Expected Percentage Control calculated by Colby's formula | Difference between observed and expected Control; Conclusion |
| Flufenacet (400 g/L) + | 0.6 L/ha | 30 | - | - |
| Diflufenican (200 g/L) [T + 185] | | | | |
| Metamitron | 1400 g/ha | 1 | - | - |
| Flufenacet (400 g/L) + Diflufenican (200 g/L) [T + 185] + Metamitron | 0.6 L/ha + 1400 g/ha | 64 | - | - |
| Colby's formula calculation: | | | 30.70 | + 33.30; Synergistic (208.4 7%) |
| Application : Post-emergence | | | | |
| Flufenacet (400 g/L) + Diflufenican (200 g/L) [T + 53] | 0.6 L/ha | 5 | - | - |
| Metamitron | 1400 g/ha | 20 | - | - |
| Flufenacet (400 g/L) + Diflufenican (200 g/L) [T + 53] + Metamitron | 0.6 L/ha + 1400 g/ha | 34 | - | - |
| Colby's formula calculation: | | | 24 | + 10; Synergistic (141.67%) |
| Flufenacet (400 g/L) + Diflufenican | 0.6 L/ha | 9 | - | - |
| (200 g/L) [T + 154] | | | | |
| Metamitron | 1400 g/ha | 5 | - | - |
| Flufenacet (400 g/L) + Diflufenican (200 g/L) [T + 154] + Metamitron | 0.6 L/ha + 1400 g/ha | 27 | - | - |
| Colby's formula calculation: | | | 13.55 | + 13.45; Synergistic (199.26%) |
| Weed - GERDI | | | | |
| Metamitron 700 g/L | 0.6 L/ha | 18 | - | - |
| Flufenacet 600 g/kg | 240 g/ha | 10 | - | - |
| Metamitron 700 g/L + Flufenacet 600 g/kg | 0.6 + 240 | 55 | - | - |
| Colby's formula calculation: | | | 26.20 | Synergistic (210%) |
| Control of ALOMY pre-emergence | | | | |
| Metamitron 700 g/L | 1400 g/ha | 1 | - | - |

(continued)

| Control of ALOMY pre-emergence | | | | |
|---|---|---|---|---|
| Flufenacet 400 + Diflufenican 200 | 240 + 120 | 30 | - | - |
| Metamitron 700 g/L + Flufenacet 400 + Diflufenican 200 | 480 + 120 + 1400 | 64 | - | - |
| Colby's formula calculation: | | | 30.70 | + 208.47% Synergistic |
| Control of ALOMY post-emergence | | | | |
| Metamitron 700 g/L | 1400 g/ha | 5 | - | - |
| Flufenacet 400 + Diflufenican 200 | 240 + 120 | 9 | - | - |
| Metamitron 700 g/L + Flufenacet 400 + Diflufenican 200 | 480 + 120 + 1400 | 27 | - | - |
| Colby's formula calculation: | | | 13.55 | + 199.26 % Synergistic |
| Weed - LOLMU | | | | |
| Metamitron 700 g/L | 1400 g/ha | 5 | - | - |
| Flufenacet 600 g/kg | 120 g/ha | 77 | - | - |
| Metamitron 700 g/L + Flufenacet 600 g/kg | 1400 + 120 | 89 | - | - |
| Colby's formula calculation: | | | 78 | + 114 % Synergistic |
| Weed - LAMPU | | | | |
| Metamitron 700 g/L | 1400 g/ha | 40 | - | - |
| Flufenacet 600 g/kg | 120 g/ha | 55 | - | - |
| Metamitron 700 g/L + Flufenacet 600 g/kg | 1400 + 120 | 90 | - | - |
| Colby's formula calculation: | | | 73 | + 123 % Synergistic |
| Weed - STEME | | | | |
| Metamitron 700 g/L | 1400 g/ha | 19 | - | - |
| Flufenacet 600 g/kg | 120 g/ha | 58 | - | - |
| Metamitron 700 g/L + Flufenacet 600 g/kg | 1400 + 120 | 78 | - | - |
| Colby's formula calculation: | | | 66 | + 118 % Synergistic |
| Weed - CENCY | | | | |
| Metamitron 700 g/L | 1400 g/ha | 20 | - | - |
| Flufenacet 600 g/kg | 120 g/ha | 27 | - | - |
| Metamitron 700 g/L + Flufenacet 600 g/kg | 1400 + 120 | 54 | - | - |

(continued)

| Weed - CENCY | | | | |
|---|---|---|---|---|
| Colby's formula calculation: | | | 41.6 | + 129 % Synergistic |
| Weed - CENCY (artificial sowing, n = 2 field trials, DAT - 5.4 months, pre-emergent application | | | | |
| Metamitron 700 g/L | 1400 g/ha | 20 | - | - |
| Diflufenican 500 g/L SC | 80 g/ha | 38 | - | - |
| Metamitron 700 g/L + Diflufenican 500 g/L | 1400 + 80 | 73 | - | - |
| Colby's formula calculation: | | | 50.4 | + 145 % Synergistic |
| Weed - LOLMU | | | | |
| Metamitron 700 g/L | 1400 g/ha | 5 | - | - |
| Diflufenican 500 g/L SC | 80 g/ha | 10 | - | - |
| Metamitron 700 g/L + Diflufenican 500 g/L | 1400 + 80 | 25 | - | - |
| Colby's formula calculation: | | | 14.5 | + 172 % Synergistic |
| Weed - GALAP | | | | |
| Metamitron 700 g/L | 1400 g/ha | 20 | - | - |
| Diflufenican 500 g/L SC | 80 g/ha | 68 | - | - |
| Metamitron 700 g/L + Diflufenican 500 g/L | 1400 + 80 | 82 | - | - |
| Colby's formula calculation: | | | 74.4 | + 110 % Synergistic |
| Weed - POROL | | | | |
| Metamitron 700 g/L | 1400 g/ha | 30 | - | - |
| Diflufenican 500 g/L SC | 80 g/ha | 65 | - | - |
| Metamitron 700 g/L + Diflufenican 500 g/L | 1400 + 80 | 80 | - | - |
| Colby's formula calculation: | | | 75 | + 107 % Synergistic |

Surprisingly, the combinations of the present invention provided quick suppression/control of the sedges, broadleaves and grassy weeds and allowed for longer residual control. The use of the herbicidal combinations of the present invention having different modes of action prevented sedges, broadleaves and grassy weeds to mature into a reproductive state.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention.

**Claims**

1. A herbicidal combination comprising:

(a) metamitron; and

(b) at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

2.  The combination as claimed in claim 1, further comprising:

(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

3.  The combination as claimed in claim 2, comprising:

(a) metamitron;

(b) flufenacet; and

(c) at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

4.  The combination as claimed in claim 1 comprising:

(a) metamitron;

(b) diflufenican; and

(c) at least one pyridine herbicide selected from the group consisting of aminopyralid, cliodinate, clopyralid, dithiopyr, florpyrauxifen, flufenican, fluroxypyr, halauxifen, haloxydine, picloram, picolinafen, pyriclor, pyroxsulam, thiazopyr, and triclopyr.

5.  The combination as claimed in claim 3 comprising:

(a) metamitron;

(b) flufenacet; and

(c) diflufenican.

6.  A herbicidal composition comprising a combination as claimed in claims 1 to 5, and at least one agrochemically acceptable excipient.

7.  A method of controlling weeds at a locus, said method comprising applying to the locus a combination as claimed in claims 1 to 5 or a composition as claimed in claim 6.

8.  The method according to claim 7, which is a method of controlling weeds in a crop, said method comprising applying, to the crop or to a locus at which the crop is growing or intended to be grown, a combination as claimed in claims 1 to 5 or a composition as claimed in claim 6.

9.  A method of increasing yield in a crop by application of a combination as claimed in claims 1 to 5 or a composition as claimed in claim 6.

10. A method of improving the plant health of a crop, said method comprising application at the locus of the crop a combination as claimed in claims 1 to 5 or a composition as claimed in claim 6.

11. The method as claimed in claims 8 - 10, wherein the crop is a cereal crop.

12. The method as claimed in claim 7 or 8, wherein the controlled weed is Alopecurus myosuroides Huds. (blackgrass, ALOMY).

13. A kit-of-parts comprising a plurality of components, wherein said plurality of components comprises:

(a) at least a first component comprising metamitron; and

(b) at least a second component comprising at least one anilide herbicide selected from the group consisting of chloranocryl, cisanilide, clomeprop, cypromid, diflufenican, erlujixiancaoan, etobenzamid, fenasulam, flufenacet, flufenican, ipfencarbazone, mefenacet, mefluidide, metamifop, monalide, naproanilide, pentanochlor, picolinafen, propanil, sulfentrazone, and tetflupyrolimet.

**14.** The kit of claim 13, further comprising:
(c) additionally a third component comprising at least one pyridine herbicide selected from the group consisting of aminopyralid, cliodinate, clopyralid, diflufenican, dithiopyr, florpyrauxifen, flufenican, fluroxypyr, halauxifen, haloxydine, picloram, picolinafen, pyriclor, pyroxsulam, thiazopyr, and triclopyr.

Europäisches
Patentamt
European
Patent Office
Office européen
des brevets

# EUROPEAN SEARCH REPORT

**Application Number**

EP 21 16 4946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/082958 A2 (BAYER CROPSCIENCE AG [DE]; MENNE HUBERT [DE] ET AL.) 14 July 2011 (2011-07-14) | 13,14 | INV. A01N43/707 A01N43/82 |
| Y | * page 9, lines 21-22 * | 1,2,6-14 | A01N43/40 |
| A | * page 33 * * claims * * examples * | 3-5 | A01P13/00 |
| X | DÜCKER REBECKA ET AL: "Enhanced metabolism causes reduced flufenacet sensitivity in black-grass ( Alopecurus myosuroides Huds.) field populations", PEST MANAGEMENT SCIENCE, vol. 75, no. 11, 22 November 2019 (2019-11-22), pages 2996-3004, XP055812545, ISSN: 1526-498X, DOI: 10.1002/ps.5414 | 13,14 | |
| A | * abstract * * page 3003, left-hand column * | 1-12 | |
| X | WO 2020/039366 A1 (UPL LTD [IN]) 27 February 2020 (2020-02-27) | 13,14 | TECHNICAL FIELDS SEARCHED (IPC) |
| A | * claim 3 * | 1-12 | A01N |
| X | WO 2017/068587 A1 (ADAMA AGAN LTD [IL]) 27 April 2017 (2017-04-27) | 13,14 | |
| Y | * page 17; table 2 * | 1,2,6-14 | |
| A | * claims * * examples * | 3-5 | |
| X | JP H08 67604 A (NISSAN CHEMICAL IND LTD [JP]) 12 March 1996 (1996-03-12) | 13,14 | |
| Y | * abstract * | 1,2,6-14 | |
| A | * table 3 * * table 4 * | 3-5 | |

The present search report has been drawn up for all claims

| Place of search | Date of completion of the search | Examiner |
|---|---|---|
| Munich | 16 July 2021 | Galley, Carl |

EPO FORM 1503 03.82 (P04C01)

## ANNEX TO THE EUROPEAN SEARCH REPORT
## ON EUROPEAN PATENT APPLICATION NO.

EP 21 16 4946

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2021

| Patent document cited in search report | | Publication date | Patent family member(s) | | Publication date |
|---|---|---|---|---|---|
| WO 2011082958 | A2 | 14-07-2011 | DK | 2512248 T3 | 21-11-2016 |
| | | | EP | 2512248 A2 | 24-10-2012 |
| | | | ES | 2601837 T3 | 16-02-2017 |
| | | | HR | P20161400 T1 | 16-12-2016 |
| | | | HU | E030350 T2 | 29-05-2017 |
| | | | LT | 2512248 T | 25-11-2016 |
| | | | PL | 2512248 T3 | 31-01-2017 |
| | | | PT | 2512248 T | 14-11-2016 |
| | | | US | 2011152091 A1 | 23-06-2011 |
| | | | WO | 2011082958 A2 | 14-07-2011 |
| WO 2020039366 | A1 | 27-02-2020 | AR | 116012 A1 | 25-03-2021 |
| | | | BR | 112021003218 A2 | 18-05-2021 |
| | | | CN | 113056198 A | 29-06-2021 |
| | | | WO | 2020039366 A1 | 27-02-2020 |
| WO 2017068587 | A1 | 27-04-2017 | CN | 108366563 A | 03-08-2018 |
| | | | EA | 201891011 A1 | 31-10-2018 |
| | | | EP | 3364760 A1 | 29-08-2018 |
| | | | WO | 2017068587 A1 | 27-04-2017 |
| JP H0867604 | A | 12-03-1996 | NONE | | |

EPO FORM P0459

For more details about this annex : see Official Journal of the European Patent Office, No. 12/82